# EUROPEAN PATENT SPECIFICATION

(11) **EP 2 840 276 B1**
(45) Date of publication and mention of the grant of the patent: **23.08.2017**
(21) Application number: 14178095.7
(22) Date of filing: 23.07.2014
(51) Int. Cl.: F16D 48/06

(54) **Clutch learning apparatus**
Kupplungslernvorrichtung
Appareil d'apprentissage d'embrayage

(30) Priority: 29.07.2013 JP 2013157089
(43) Date of publication of application: 25.02.2015
(73) Proprietor: AISIN SEIKI KABUSHIKI KAISHA, Kariya-shi, Aichi 448-8650 (JP)
(72) Inventor: Harada, Shinya, Kariya-shi, Aichi 448-8650 (JP)
(74) Representative: Kramer Barske Schmidtchen Patentanwälte PartG mbB

(56) References cited:
- EP-A1- 2 416 029
- WO-A1-2011/161757
- WO-A1-2012/133059

## Description

### TECHNICAL FIELD

An embodiment of this disclosure relates to a clutch learning apparatus that learns a position where a clutch mounted on a vehicle begins to be connected.

### BACKGROUND DISCUSSION

A clutch that switches transmission/non-transmission of power is provided between an internal combustion engine and a gear shift mechanism of a vehicle. As the control states of the clutch, there are three states of a connected state, a disconnected state, and a slip state where contact is made while slipping in an intermediate state therebetween. Since the clutch is brought into the slip state whenever the clutch is switched from the disconnected state to the connected state, the clutch wears out and becomes thin as its use proceeds. Incidentally, when the clutch is worn out, there is a case where the connection/disconnection operation of the clutch is not performed at an intended timing. For example, if the disconnection time of the clutch becomes long, the time period for which torque transmission to the gear shift mechanism side cannot be made becomes long correspondingly. Thus, a feeling of stalling of a vehicle may be produced, or the internal combustion engine disconnected from the gear shift mechanism side may blow up excessively. Therefore, there is known a learning technique of performing the learning of a position where the clutch begins to be connected, in other words, the learning of a control position where rotary power begins to be transmitted, what is so called, engagement starting point learning, and reflecting the result of the learning in control. When the clutch is in the disconnected state, generally, the rotation speed of the input shaft side of the gear shift mechanism is lower than the rotation speed of a crankshaft of the internal combustion engine. Therefore, if shifting from the disconnected state to the connected state is performed, the rotation speed of the input shaft side changes suddenly when contact is made. Learning this timing as the engagement starting point is known.

JP 2012-86596A is an example of related art.

However, in order to perform the engagement starting point learning, after the clutch is first brought into the disconnected state, it is necessary to bring the clutch into the connected state through the slip state again. Accordingly, there is a case where it is necessary to intentionally disconnect the clutch for the engagement starting point learning, control becomes complicated, or the timing of the engagement starting point learning is limited. Therefore, a technique of executing the engagement starting point learning through easy control without an execution timing being likely to be restricted is desired. Further transmission control devices are known from EP 2 416 029 A1, WO 2011/161757 A1 and WO 2012/133059 A1.

### SUMMARY

A clutch learning apparatus according to an embodiment of this disclosure includes a gear shift mechanism that has a plurality of gear pairs with different gear ratios between an input shaft and an output shaft and that switches between a torque transmission state where torque is transmitted and a torque non-transmission state where torque is not transmitted between the input shaft and the output shaft for each of the gear pairs; a clutch that is connected to the input shaft of the gear shift mechanism and changes a rotation transmission state of rotary power to be supplied from a driving source side; a control unit that controls the rotation transmission state of the clutch; and a storage unit that stores transmission information showing that the rotary power begins to be transmitted to the input shaft by the clutch. The control unit performs the clutch control of disconnecting the clutch after being temporarily brought into the rotation transmission state while the gear pair in the torque transmission state is changed to another gear pair with a different gear ratio in the gear shift mechanism. The storage unit stores the transmission information when a change in the rotation state of the input shaft side is a predetermined value or more due to the clutch control. According to this embodiment, since it is possible to execute shift change control frequently performed during driving of a vehicle, that is, to execute learning during the control that requires disconnection of the clutch, it is not necessary to separately provide a control period for the engagement starting point learning, and the engagement starting point learning can be easily performed. Additionally, since the shift change control is frequently performed during driving of a vehicle, the possibility that the engagement starting point learning is restricted in terms of execution timing is low, and the learning can be repeated multiple times. Moreover, since there is a chance to learn for every shift change control, it is possible to shorten learning intervals, and learning precision can be improved. Additionally, although the clutch is brought into a slip state for every start or every gear shift, and is apt to generate heat and expand thermally, since there is a chance of learning for every shift change control, the influence of the thermal expansion is easily reflected in the learning. As a result, not only learning frequency can be improved, but also the reliability of learning results can be improved.

In the clutch learning apparatus according to the embodiment, a motor that adjusts the output torque of the output shaft while the gear pair of the torque transmission state is changed to another gear pair with a different gear ratio may be connected to the output shaft. According to this embodiment, since the supply of rotary power from an internal combustion engine is temporarily cut off during clutch control, the output torque of the output shaft decreases, but the decrease of the output torque can be suppressed by complementing the torque with the motor.

In the clutch learning apparatus according to the embodiment, the storage unit may store new transmission information when the gear shift mechanism switches a gear pair in the torque transmission state from a gear pair with a high gear ratio to a gear pair with a low gear ratio. In the case of the down-shift in which the gear shift mechanism is changed from a gear pair with a high gear ratio to a gear pair with a low gear ratio, it is desirable to increase the rotation speed of an internal combustion engine so that there is smooth switching to the gear pair with a low gear ratio. That is, since the rotation speed of the internal combustion engine side is increased during the clutch control at the time of the down-shift, if the clutch is temporarily brought into the rotation transmission state, a change in the rotation speed on the input shaft side appears markedly. As a result, a phenomenon in which the change in the rotation state reaches a predetermined value or more can be clearly detected, and the reliability of the transmission information can be improved.

In the clutch learning apparatus according to the embodiment, the gear shift mechanism may be a dog transmission. According to this embodiment, the synchronization of the rotation speed of the internal combustion engine side and the rotation speed of the gear shift mechanism side becomes easy by performing the clutch control for the engagement starting point learning, while performing the engagement starting point learning of the clutch. As a result, it is possible to utilize the dog transmission in which miniaturization, simplification, and cutting costs is easy. This can contribute to miniaturization, simplification, and cost reduction of the clutch learning apparatus in which the engagement starting point learning is possible.

In the clutch learning apparatus according to the invention, the transmission information is information on a position where the clutch begins to be connected.

In the clutch learning apparatus according to the invention, the transmission information is information on an engagement starting point where the clutch begins to be connected.

In the clutch learning apparatus according to the embodiment, the engagement starting point may be stored during a shift operation of the gear shift mechanism in the torque non-transmission state.

In the clutch learning apparatus according to the embodiment, the control unit may perform a double clutch control in which the gear shift mechanism is temporarily brought into the rotation transmission state after the clutch is disconnected from the rotation transmission state before gear shift of the gear shift mechanism, and the clutch is disconnected again.

### BRIEF DESCRIPTION OF THE DRAWINGS

The foregoing and additional features and characteristics of this disclosure will become more apparent from the following detailed description considered with the reference to the accompanying drawings, wherein:
Fig. 1 is a functional block diagram of a hybrid vehicle including a clutch learning apparatus related to an embodiment;
Fig. 2 is a schematic view of a drive system centering on a drive train of the hybrid vehicle including the clutch learning apparatus related to the embodiment;
Fig. 3 is a schematic view showing the structure of a clutch that is applicable to the clutch learning apparatus related to the embodiment;
Fig. 4 is a flowchart illustrating the learning processing of the clutch learning apparatus related to the embodiment;
Fig. 5 is a timing chart showing the states of respective components during down-shift according to the flowchart of Fig. 4;
Fig. 6 is a functional block diagram of a hybrid vehicle of another configuration including the clutch learning apparatus related to the embodiment; and
Fig. 7 is a schematic view of a modified example of the drive system centering on a drive train of the hybrid vehicle including the clutch learning apparatus related to the embodiment.

### DETAILED DESCRIPTION

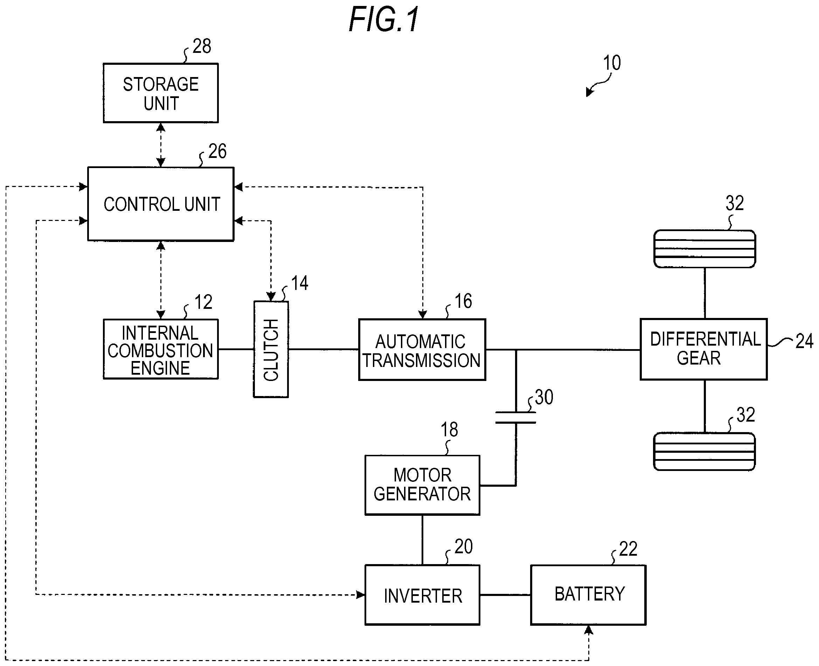

Fig. 1 is a functional block diagram of a hybrid vehicle including a clutch learning apparatus related to an embodiment. The clutch learning apparatus of the present embodiment executes the learning of a position where the clutch begins to be connected, in other words, the learning of a control position where rotary power begins to be transmitted, what is so called, an engagement starting point learning while a gear shift mechanism performs the shift of a gear, and enables the result of the learning to be reflected in various kinds of control.

A hybrid vehicle 10 shown in Fig. 1 is constituted by an internal combustion engine 12, a clutch 14, an automatic transmission (an automated transmission) 16, a motor generator 18, an inverter 20, a battery 22, a differential device (differential gear) 24, a control unit 26, a storage unit 28, or the like. In addition, in Fig. 1, the configuration irrelevant to the present embodiment is omitted.

The internal combustion engine 12 is, for example, a gasoline engine or the like, and engine speed or engine torque is controlled by the control of the control unit 26. The clutch 14 is arranged between an output shaft of the internal combustion engine 12 and an input shaft of the automatic transmission 16. The clutch 14 has three states of a connected state where the power (rotary power or rotary torque) supplied from an internal combustion engine 12 side is transmitted, a disconnected state where the power is not transmitted, and a slip state where contact is made while slipping in an intermediate state between the connected state and the disconnected state. A control state of the clutch 14 is also controlled by the control unit 26.

Although the automatic transmission (gear shift mechanism) 16 can be a dog transmission including the so-called dog clutch to be described below, the automatic transmission may be transmissions equipped with a synchromesh in other examples. The motor generator 18 is connected to an output shaft side of the automatic transmission 16. In the configuration of Fig. 1, a switching mechanism 30 is provided between the motor generator 18 and the output shaft of the automatic transmission 16. A case where the motor generator 18 is directly connected to the output shaft side of the automatic transmission 16 and a case where the motor generator 18 is separated from the output shaft side of the automatic transmission 16 can be selected by the switching mechanism 30. In the case where the motor generator 18 is directly connected to the output shaft side, it is possible to receive the power supplied via the inverter 20 from the battery 22 to provide the output torque of the motor generator 18 functioning as a motor to a differential device 24 side. Accordingly, in the case where the driving power supplied from the internal combustion engine 12 is not received, EV driving having only the motor generator 18 as a driving source is enabled. Additionally, in the case where the driving power supplied from the internal combustion engine 12 is received, assist driving that assists in the driving power of the internal combustion engine 12 is enabled. Additionally, it is possible to make the motor generator 18 function as a generator at the time of the braking of the hybrid vehicle 10 to charge the battery 22 via the inverter 20. In addition, if the motor generator 18 is separated from an automatic transmission 16 side by the switching mechanism 30, the engine driving with only the internal combustion engine 12 is enabled.

The differential device 24 distributes and transmits the torque from a power source (the internal combustion engine 12, the motor generator 18, or both) to respective wheels 32 while absorbing the speed difference (difference between rotation speeds) caused in the inner and outer wheels 32 when the hybrid vehicle 10 turns.

The control unit 26 performs a cooperation control of the internal combustion engine 12, the clutch 14, the automatic transmission 16, the inverter 20, the battery 22, or the like to realize optimal driving, according to a driving demand based on the driving operation of a driver or the driving state of the hybrid vehicle 10. In addition, in the case of the configuration of Fig. 1, the control unit 26 is shown as an integrated control unit that carries out integrated control of respective devices. However, the control unit may include individual control units for every controlled object, and the respective control units may perform cooperation control. Additionally, several functions may be put together and controlled. The storage unit 28 stores various kinds of information that the control unit 26 acquires. Additionally, the stored information is provided to the control unit 26, and is reflected in the feedback control of the respective devices. In addition, on the basis of the acquired various kinds of information, the control unit 26 may process information to create new information, or may cause the existing information to be updated and stored in the storage unit 28.

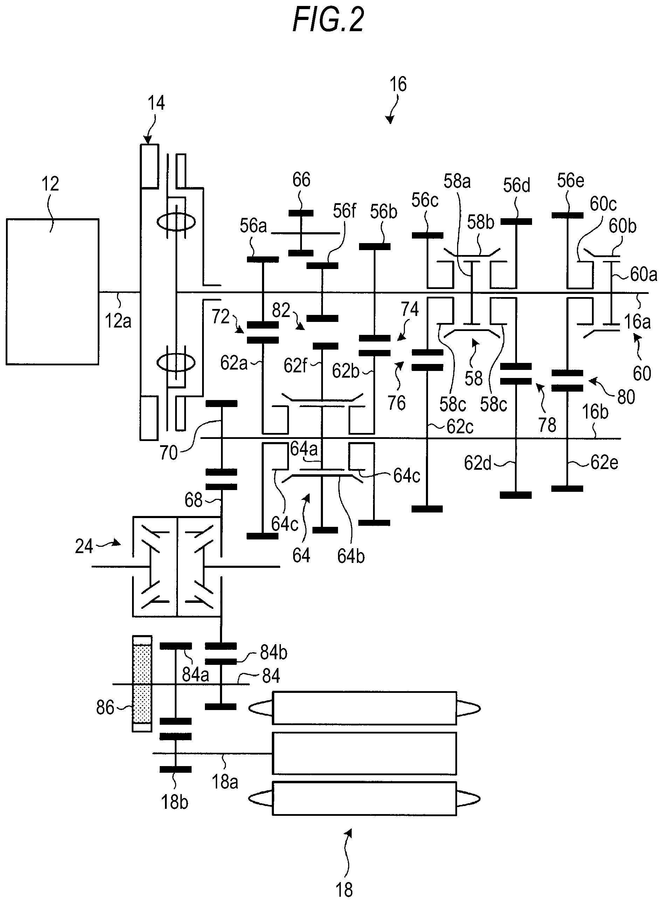

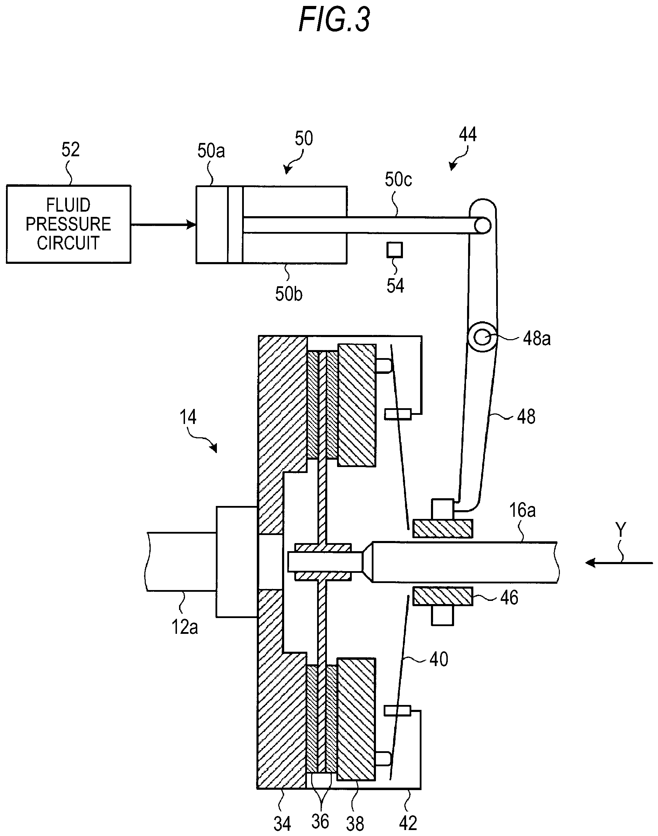

Fig. 2 is a schematic view of a drive system centering on a drive train of the hybrid vehicle 10. In addition, an example in which the switching mechanism 30 of Fig. 1 is omitted and the motor generator 18 is directly connected to the differential device 24 is shown in the configuration of Fig. 2. A dry clutch 14, for example, is arranged between an input shaft 16a of the automatic transmission 16 and a crankshaft 12a of the internal combustion engine 12. The detailed structure of the clutch 14 is shown in Fig. 3.

The clutch 14 has a flywheel 34, a clutch disk 36, a pressure plate 38, a diaphragm spring 40, a clutch cover 42, and a clutch control mechanism 44.

The flywheel 34 is connected to the crankshaft 12a, and is integrally rotated with the crankshaft 12a. The clutch cover 42 is integrally rotatably attached to the flywheel 34. The clutch disk 36 is attached to the input shaft 16a of the automatic transmission 16 by spline fitting. The clutch disk 36 is relatively movable in an axial direction and relatively non-rotatable with respect to the input shaft 16a. The clutch disk 36 faces the flywheel 34 in the axial direction.

The pressure plate 38 faces the flywheel 34 in the axial direction with the clutch disk 36 therebetween. The pressure plate 38 has an annular shape, and has the input shaft 16a inserted into a radial central portion thereof. The diaphragm spring 40 faces the flywheel 34 in the axial direction with the clutch disk 36 and the pressure plate 38 therebetween. The diaphragm spring 40 has an annular shape, and is supported by the clutch cover 42 at a radial intermediate portion.

The diaphragm spring 40 can move the pressure plate 38 toward the flywheel 34 to thereby bring the clutch disk 36 into contact with the flywheel 34 and further press the flywheel. The diaphragm spring 40 is supported by the clutch cover 42 so that an outer peripheral portion thereof abuts against the pressure plate 38 and exerts a biasing force to the pressure plate 38. Accordingly, the biasing force of the diaphragm spring 40 brings the clutch disk 36 and the pressure plate 38, and the flywheel 34 and the clutch disk 36 into contact with each other, respectively, to generate a frictional force. Power is transmitted via the clutch 14 between the crankshaft 12a and the input shaft 16a by this frictional force.

The clutch control mechanism 44 adjusts the contact degree of the clutch 14. The clutch control mechanism 44 has a release bearing 46, a release fork 48, and an actuator 50. The release bearing 46 is fitted to the input shaft 16a, and is relatively movable in the axial direction with respect to the input shaft 16a. The release bearing 46 comes into contact with an inner end portion of the diaphragm spring 40 in the radial direction.

The actuator 50 has a cylinder 50b having a fluid chamber 50a, and a piston rod 50c. The actuator 50 advances and retracts the piston rod 50c in the axial direction of the cylinder 50b by the fluid pressure of the fluid chamber 50a. The release fork 48 is rotatably supported on a fulcrum 48a. One end of the release fork 48 is connected to the release bearing 46, and the other end thereof is connected to the piston rod 50c. If fluid pressure is supplied to the fluid chamber 50a and the piston rod 50c is advanced in a direction in which the piston rod is protruded from the cylinder 50b, the release fork 48 moves the release bearing 46 to a flywheel 34 side (arrow Y). Accordingly, the release bearing 46 presses a central portion of the diaphragm spring 40. This pressing force reduces a pressing force with which the diaphragm spring 40 presses the pressure plate 38.

Transmittable maximum torque, that is, the torque capacity of the clutch 14, changes in the clutch 14 according to the magnitude of the pressing force with which the diaphragm spring 40 presses the pressure plate 38. In the following description, the transmittable maximum torque is referred to as "clutch torque" in the clutch 14. The clutch torque changes according to the fluid pressure supplied from a fluid pressure circuit 52 to the fluid chamber 50a of the actuator 50, and changes according to the amount of advance and retraction of the piston rod 50c, that is, a clutch stroke. Accordingly, the control of the clutch torque can be executed as the control of the clutch stroke. The clutch control mechanism 44 has a clutch stroke sensor 54 that detects the clutch stroke. The clutch stroke sensor 54 detects the amount of axial movement of the piston rod 50c.

The actuator 50 can adjust the clutch stroke, depending on the fluid pressure to be regulated and supplied by the fluid pressure circuit 52, to thereby control the clutch torque. Accordingly, the actuator 50 can arbitrarily control the clutch stroke according to the controlled fluid pressure. Accordingly, the actuator 50 can control the clutch 14 to be in the three states of the connected state where the clutch is completely connected, the disconnected state where the clutch is completely disconnected, and the slip state between the connected state and the disconnected state. The connected state is a state where the flywheel 34 and the clutch disk 36 come into contact with each other and integrally rotate with the same rotation speed. The slip state is a state where the flywheel 34 and the clutch disk 36 come into contact with each other and rotate with different rotation speeds. The disconnected state is a state where the flywheel 34 and the clutch disk 36 are disconnected from each other and power is not transmitted. Additionally, the actuator 50 can control the transmission degree of power in the slip state of the clutch 14.

In a region where the clutch stroke is the smallest, the clutch torque is greatest, and the clutch 14 is brought into the connected state. The clutch torque decreases as the clutch stroke increases, and if the clutch torque becomes smaller than torque to be input, the slip state is brought about. In a region where the clutch stroke is greatest, the clutch torque reaches "0", and the disconnected state where the clutch 14 is disconnected and power is not transmitted is brought about.

Referring back Fig. 2, the input shaft 16a spline-fitted to the clutch disk 36 includes a plurality of driving gears that constitute a plurality of gear pairs. In the case of the example shown in Fig. 2, a first speed driving gear 56a, a second speed driving gear 56b, and a reversing driving gear 56f are fixed to the input shaft 16a and are configured so as to rotate integrally. Meanwhile, a third speed driving gear 56c, a fourth speed driving gear 56d, and a fifth speed driving gear 56e are rotatably supported by the input shaft 16a.

A first dog clutch 58 is provided between the third speed driving gear 56c and the fourth speed driving gear 56d. The first dog clutch 58 has a ring-shaped sleeve 58b that is spline-fitted to an outer peripheral surface of a hub 58a fixed to the input shaft 16a and is movable in the axial direction. A clutch ring 58c, which is coaxially fixed to the third speed driving gear 56c and is rotatable with respect to the input shaft 16a, is provided on one side of the hub 58a. A clutch ring 58c, which is coaxially fixed to the fourth speed driving gear 56d and is rotatable with respect to the input shaft 16a, is provided on the other side. Dog teeth that mesh with the spline of the sleeve 58b are arranged in a circumferential direction on the side surface of the clutch ring 58c that faces the hub 58a. Accordingly, when the sleeve 58b moves on the hub 58a toward the clutch ring 58c on a third speed driving gear 56c side and the spline and the dog teeth mesh with each other, the third speed driving gear 56c is fixed to the input shaft 16a, is integrally rotated therewith, and is brought into a torque transmission state.

Accordingly, when the sleeve 58b moves on the hub 58a toward the clutch ring 58c on a fourth speed driving gear 56d side and the spline and the dog teeth mesh with each other, the fourth speed driving gear 56d is fixed to the input shaft 16a, is integrally rotated therewith, and is brought into the torque transmission state. Meanwhile, since the clutch ring 58c on the side where the spline and the dog teeth do not mesh with each other maintains the state of being rotatable with respect to the input shaft 16a, the driving gear integrated with the clutch ring 58c also maintains the state of being rotatable with respect to the input shaft 16a. That is, the torque non-transmission state is brought about. In addition, when the sleeve 58b is present at a neutral position on the hub 58a, both of the third speed driving gear 56c and the fourth speed driving gear 56d are brought into the torque non-transmission state.

The fifth speed driving gear 56e is provided with a second dog clutch 60. The second dog clutch 60 has the same configuration as the first dog clutch 58 except that a clutch ring 60c is present on one side of the hub 60a so as to switch between the torque transmission state and the torque non-transmission state of the fifth speed driving gear 56e, and meshes with a sleeve 60b.

An output shaft 16b of the automatic transmission 16 includes a first speed driven gear 62a to a fifth speed driven gear 62e and a reversing driven gear 62f corresponding to the first speed driving gear 56a to the fifth speed driving gear 56e and reversing driving gear 56f. The third speed driven gear 62c to the fifth speed driven gear 62e are fixed to the output shaft 16b, and a third dog clutch 64 is provided between the first speed driven gear 62a and the second speed driven gear 62b. The third dog clutch 64 has the same configuration as the first dog clutch 58, and switches the first speed driven gear 62a and the second speed driven gear 62b to the torque transmission state and the torque non-transmission state with respect to the output shaft 16b depending on the operating state of the third dog clutch 64. The third dog clutch 64 can also control the first speed driven gear 62a and the second speed driven gear 62b to be in a neutral state where the first and second speed driven gears are brought into the torque non-transmission state by locating a sleeve 64b so that a spline and dog teeth do not mesh with each other between the third clutch 64 and a clutch ring 64c that faces the third dog clutch 64.

In addition, the reversing driven gear 62f is fixed to an outer peripheral surface of the sleeve 64b of the third dog clutch 64. At the time of reversing, a reverse idler 66 is inserted between the reversing driving gear 56f and the reversing driven gear 62f. If the input shaft 16a is rotated in a rotational direction during forward driving, the hub 64a spline-fitted to the sleeve 64b rotates in a direction (reversing direction) opposite to that of the forward driving. Since the hub 64a is fixed to the output shaft 16b, the output shaft 16b rotates in the reversing direction. In addition, the reverse idler 66 may be configured so as to be switched to the torque transmission state at the time of reversing and the torque non-transmission state in other cases by a dog clutch.

Additionally, an output gear 70 that meshes with a ring gear 68 of the differential device 24 is fixed to the output shaft 16b. The first speed driving gear 56a to the fifth speed driving gear 56e and the reversing driving gear 56f mesh with the first speed driven gear 62a to the fifth speed driven gear 62e and the reversing driven gear 62f, respectively, and constitute a first gear pair 72, a second gear pair 74, a third gear pair 76, a fourth gear pair 78, a fifth gear pair 80, and a reversing gear pair 82. When the hybrid vehicle 10 is driven using the power of the internal combustion engine 12, the control unit 26 moves a sleeve of a dog clutch so that any one pair of gear pairs is brought into the torque transmission state, and transmits torque from the input shaft 16a to the output shaft 16b.

In addition, an example in which the switching mechanism 30 of Fig. 1 is omitted and the motor generator 18 is directly connected to the differential device 24 is shown in the configuration of Fig. 2. That is, a driving gear 18b is fixed to an output shaft 18a of the motor generator 18, and meshes with a driven gear 84a fixed to a counter shaft 84. Additionally, a pinion gear 84b is fixed to the counter shaft 84, and meshes with the ring gear 68. Accordingly, when the hybrid vehicle 10 is driven only with the driving power of the motor generator 18, the respective dog clutches may be controlled so that all the respective gear pairs on the automatic transmission 16 side are brought into the neutral state. Additionally, since the motor generator 18 is directly connected to the differential device 24, the motor generator 18 becomes a load when the torque assist using the motor generator 18 is not required. In such a case, the torque of an amount such that the load is cancelled out may be generated by the motor generator 18. In addition, in the case of the example of Fig. 2, a parking gear 86 is fixed to the counter shaft 84. When a parking state is brought about by shift lever operation or the like, the rotation of the counter shaft 84 and the ring gear 68 is made impossible by engaging a locking claw operating with an actuator (not shown), and the parking gear 86, that is, a state where the wheels are locked, that is, the parking state, can be realized.

When the driving control of the hybrid vehicle 10 configured in this way is performed, the control of the driving power (torque) generated by the internal combustion engine 12, the control of the torque transmitted by the automatic transmission 16, or the like may be performed with reference to a map showing the relationship between the a clutch stroke and the transmittable clutch torque. However, if the clutch disk 36 is worn out as mentioned above, an error may be caused in the relationship between the clutch stroke and the clutch torque, and the precision of the torque control may degrade. Thus, the position (engagement starting point) where the clutch 14 begins to be switched from the disconnected state to the slip state and transmit rotary power is learned, and the map showing the relationship between the clutch stroke and the clutch torque is corrected and used.

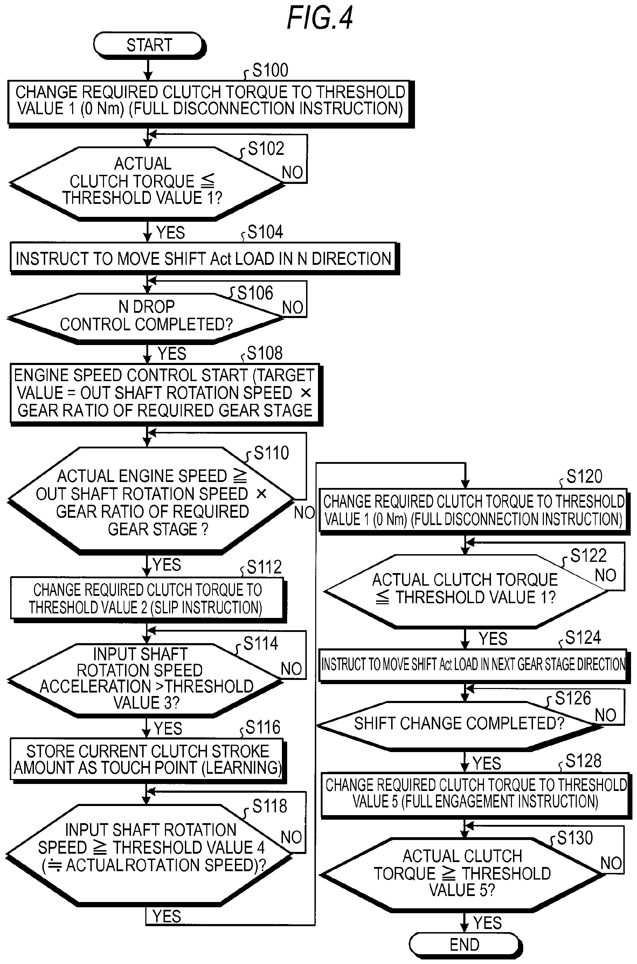

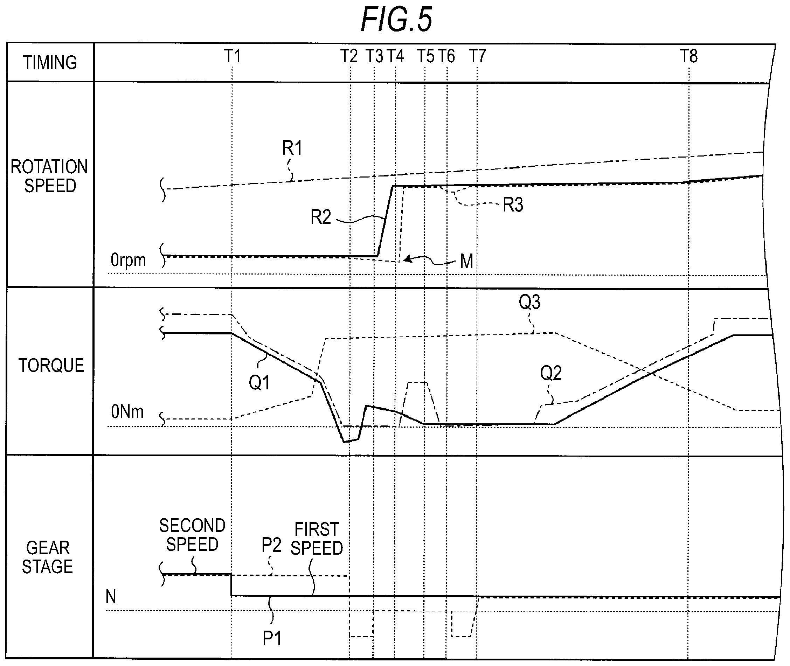

Hereinafter, the processing of engagement starting point learning in the present embodiment will be described with reference to a flowchart of Fig. 4 and a timing chart of Fig. 5. An example in which engagement starting point learning is performed during a down-shift operation is shown in the description of Figs. 4 and 5. In addition, the timing chart of Fig. 5 is an example in which gear shift is performed from a "second speed" to a "first speed", as an example of the down-shift.

When it is determined on the basis of a driver's accelerator operation amount, a vehicle speed, or the like to be a timing at which a required gear stage is down-shifted from the "second speed" to the "first speed" (timing T1 of Fig. 5), the control unit 26 changes a required clutch torque to a predetermined threshold value 1, with respect to the fluid pressure circuit 52 of the clutch 14 with the determination (S100) as a trigger. In this case, since it is first necessary to bring the clutch 14 into the "disconnected state" for gear shift, the threshold value 1 becomes a "full disconnection instruction" at "0 Nm". The clutch torque can be controlled using the value of a clutch stroke based on, for example, a detection value obtained from the clutch stroke sensor 54.

The control unit 26 changes the required gear stage P1 (a solid line of a gear stage column of Fig. 5) from "second speed" to "first speed" with respect to the automatic transmission 16 at the down-shift timing T1. Then, the control unit 26 performs the control of gradually lowering a torque Q1 (hereinafter referred to as an engine torque Q1 or an actual engine torque Q1) of the internal combustion engine 12 shown by a solid line of a torque column in Fig. 5, for preparation for down-shifting. Additionally, the control unit gradually feeds back a clutch torque Q2 (a one-dot chain line of the torque column of Fig. 5) in response to the above control to lower the actual clutch torque so that the engine torque Q1 does not exceed the clutch torque Q2. In addition, in this case, if the engine torque Q1 is decreased, the torque of the hybrid vehicle 10 as a whole falls. A so-called "torque drop" may occur and a feeling of deceleration may occur. Thus, the control unit 26 controls the motor generator 18 to complement the decreased amount of the engine torque Q1 with a motor generator torque Q3 (hereinafter referred to as an MG torque Q3) shown by a dashed line of the torque column of Fig. 5. In the present embodiment, as shown in Fig. 2, the output shaft 16b of the automatic transmission 16 and the pinion gear 84b on a motor generator 18 side mesh with the ring gear 68 of the differential device 24. Thus, the torque drop can be prevented by the operation of the motor generator 18. In addition, Fig. 5 shows changes in the rotation speed to be output to the differential device 24 side as a rotation speed R1 (hereinafter referred to as an MG rotation speed R1) of the motor generator 18 connected to the differential device 24 (one-dot chain line of the rotation speed column of Fig. 5). In this case, it is shown that a decrease in the rotation speed does not occur and the torque drop is suppressed. In addition, since the clutch 14 is in the slip state between the timings T1 and T2, an actual gear stage P2 (a dashed line of a gear stage column of Fig. 5) maintains the state of the "second speed".

The control unit 26 confirms whether or not actual clutch torque ≤ threshold value 1 (0 Nm) is satisfied, on the basis on the clutch stroke provided from the clutch stroke sensor 54 (N in S102). If actual clutch torque ≤ threshold value 1 is satisfied (Y in S102), that is, if the clutch 14 is fully disconnected (timing T2 of Fig. 5), the control unit instructs the automatic transmission 16 to move a shift Act load in an N direction (S104). In this case, an instruction (N drop instruction) that causes the sleeve 64b of the third dog clutch 64 to move to a neutral position where the second gear pair 74 is shifted to the torque non-transmission state is provided to an actuator that moves the sleeve 64b (timing T2). In addition, although the gear stage column of Fig. 5 shows the position where the actual gear stage P2 is not any of the "first speed", the "second speed", and "neutral: N" between the timings T2 and T3, this schematically shows "under movement" that the gear stage does not move to any position. This is also the same between T6 and T7.

Since the clutch 14 is basically in the connected state for a period between the timings T1 and T2 of Fig. 5, an engine speed R2 (a solid line of a rotation speed column of Fig. 5), and a rotation speed R3 (hereinafter referred to as an input shaft rotation speed R3) of the input shaft 16a of the automatic transmission 16 shown by a dashed line in the rotation speed column of Fig. 5 are nearly the same.

The control unit 26 waits for the N drop control of the third dog clutch 64 of the automatic transmission 16 to be completed (N in S106), and if the N drop control is completed (Y in S106), the control unit controls engine speed control with respect to the internal combustion engine 12 in order to synchronize the rotation speed of a gear pair after gear shift with the rotation speed of the internal combustion engine 12 (S108) (timing T3). In this case, the target value of the engine speed R2 can be OUT shaft rotation speed (the rotation speed of the crankshaft 12a) x gear ratio (the gear ratio of the first gear pair 72 in this case) of the required gear stage. In addition, in this case, since the clutch 14 is in the disconnected state, the input shaft rotation speed R3 decreases gradually without following the engine speed R2 after the timing T2.

The control unit 26 waits for actual engine speed ≥ OUT shaft rotation speed (the rotation speed of the crankshaft 12a) x gear ratio of required gear stage to be satisfied (N in S110). As shown by a timing T4 of Fig. 5, if actual engine speed ≥ OUT shaft rotation speed x gear ratio of required gear stage is satisfied (Y in S110), a so-called slip instruction that changes the required clutch torque Q2 to a threshold value 2 is issued (S112). That is, the control unit 26 executes the clutch control of disconnecting the clutch 14 after being temporarily brought into the rotation transmission state while the second gear pair 74 in the torque transmission state is changed to a gear pair (first gear pair 72) having a different gear ratio in the automatic transmission 16 (between timings T4 and T6 of Fig. 5). Since this clutch control temporarily brings about the rotation transmission state and disconnection again after the clutch is disconnected from the rotation transmission state before gear shift, this clutch control is also referred to as "double clutch control". In this case, since the torque specified by the threshold value 2 is for the purpose of synchronizing the rotation speed of the input shaft rotation speed R3 with the engine speed R2 when the automatic transmission 16 is in the neutral state that is the torque non-transmission state, this torque may not be as large as that in a case where torque transmission is aimed at. For example, the above torque may be about 30 Nm when the maximum transmission torque is 200 Nm. Additionally, the disconnection time of the clutch 14 can be shortened between the timings T5 and T6 as described below by setting the threshold value 2 at this time to be small. That is, this can contribute to shortening of gear shift time.

Incidentally, as shown by the timings T3 and T4 of Fig. 5, the engine speed R2 is raised in advance and changed to a rotation speed after gear shift. That is, in Fig. 3, the flywheel 34 rotates at a higher speed than the input shaft 16a. Therefore, the double clutch control is performed at the timing T4, and the input shaft rotation speed R3 increases at the moment the clutch disk 36 has come into contact with the flywheel 34. That is, this timing becomes the engagement starting point of the clutch 14 detected after the wear of the clutch disk 36 is taken into consideration. At this time, since the automatic transmission 16 is in the neutral state (the respective gear pairs are in the torque non-transmission state), the load to the input shaft 16a is light. Accordingly, the input shaft rotation speed R3 easily follows the engine speed R2. It should be noted that the input shaft 16a often rotates during driving. Accordingly, the control unit 26 uses an event that a change in the rotation state of the input shaft 16a side has reached a predetermined value or more by the double clutch control, as the condition of the engagement starting point learning. Specifically, when the acceleration of the input shaft rotation speed R3 has reached a predetermined threshold value 3 or more, learning is performed. The threshold value 3 is a value exceeding a change in the acceleration of the rotation speed of the input shaft 16a after the full disconnection of the clutch 14 (between the timings T2 and T4) and is a value showing a positive acceleration change.

The control unit 26 waits for the change in the rotation state of the input shaft 16a to exceed a threshold value 3 (N in S114), and if the change in the rotation speed exceeds the threshold value 3 (Y in S114), the control unit stores a clutch stroke, which is an output value of the clutch stroke sensor 54 at that time, as the engagement starting point (touch point) (S116). In the example of Fig. 5, a point where the input shaft rotation speed R3 rises abruptly is an engagement starting point M (touch point M). The control unit 26 corrects the clutch torque map showing the relationship between the clutch stroke and the clutch torque, which is stored in the storage unit 28, on the basis of the learned engagement starting point M, and updates and stores the clutch torque map in the storage unit 28 so as to be referred to in the subsequent control.

The control unit 26 waits for input shaft rotation speed R3 ≥ threshold value 4 to be satisfied after the learning of the engagement starting point M (N in S118). The threshold value 4 is an actual engine speed R2 between the timings T4 and T5, that is, the target value set in S108. If input shaft rotation speed R3 ≥ threshold value 4 is satisfied in S118 (Y in S118), the control unit 26 issues an instruction, which causes the required clutch torque to be the predetermined threshold value 1, to the fluid pressure circuit 52 of the clutch 14 (S120). That is, a "full disconnection instruction" that disconnects the clutch 14 is issued as "0 Nm" (timing T5 of Fig. 5).

The control unit 26 confirms whether or not actual clutch torque ≤ threshold value 1 (0 Nm) is satisfied, on the basis of the clutch stroke provided from the clutch stroke sensor 54 (N in S122). If actual clutch torque ≤ threshold value 1 is satisfied (Y in S122), that is, if the clutch 14 is fully disconnected, the control unit instructs the automatic transmission 16 to move the shift Act load in a next gear stage direction (S124). That is, the processing of moving the gear stage from neutral to the "first speed" is started (timing T6 of Fig. 5). In addition, although the input shaft rotation speed R3 decreases temporarily because the clutch 14 is temporarily disconnected near the timing T6, the decrease is slight.

The control unit 26 waits for the completion of switching (the shift change completion) of the next gear, that is, the completion of switching to the first gear pair 72, in the automatic transmission 16 (N in S126). Then, if it is detected that the shift change is completed, that is, it is detected that the actual gear stage P2 is down-shifted to the "first speed" by the completion of the operation of the actuator of the first dog clutch 58 (timing T7) (Y in S126), the control unit 26 issues an instruction, which causes the required clutch torque to be a predetermined threshold value 5, to the fluid pressure circuit 52 of the clutch 14 (S128). In this case, the threshold value 5 is a variable value, which is determined so as not to exceed the actual engine torque Q1 from the disconnected state (0 Nm) of the clutch 14 to the fully connected state (for example, MAX value = 200 Nm), and indicates the fully connected state of the clutch 14. If actual engine torque Q1 > clutch torque Q2 is satisfied, the difference in torque therebetween changes to the rotational energy of the engine. That is, since a blow-up state is brought about, the control unit 26 appropriately determines the threshold value 5 of the required clutch torque through feedback control while changing the threshold value, and also performs the control of increasing the engine torque Q1 of the internal combustion engine 12. Accordingly, the clutch torque Q2 and the engine torque Q1 increase approximately in synchronization with each other. Additionally, the control unit 26 decreases the MG torque Q3 in response to the increase of the engine torque Q1, and terminates the control of the motor generator 18 for the suppression of the "torque drop" accompanying gear shift (between the timings T7 and T8).

The control unit 26 waits for actual clutch torque ≥ threshold value 5 = MAX to be satisfied (N in S130), and if actual clutch torque ≥ threshold value 5 = MAX is satisfied (Y in S130), the clutch 14 is brought into the fully connected state, it is determined that the engine torque can be transmitted to the automatic transmission 16, and this flow is ended.

In this way, the clutch learning apparatus of the present embodiment performs the learning of the engagement starting point during the double clutch control to be executed while the automatic transmission 16 performs gear shift. Since the shift change control using the automatic transmission 16 is frequently executed from the start of driving to the end thereof when the hybrid vehicle 10 is driven, there are many chances for the engagement starting point learning. As a result, it is possible to frequently acquire the state of the clutch 14 and correct and update the clutch torque map, and the corrected and updated clutch torque map can be reflected in vehicle control. Additionally, the clutch 14 may generate heat due to friction in the slip state, and may cause thermal expansion in which the clutch disk 36 expands and becomes thick. In the case of the present embodiment, the learning of the engagement starting point based on the thermal expansion caused by friction can also be performed as well as the learning of the engagement starting point based on the wear of the clutch disk 36. Additionally, since the learning is performed in the middle of gear shift, the results of the learning are available at the time of the next gear shift, and the learning result can be effectively used.

Additionally, since the engagement starting point learning of the present embodiment is executed under the shift change control that is normally executed, the engagement starting point learning can be carried out without being accompanied by special processing therefor and complication of the control being caused.

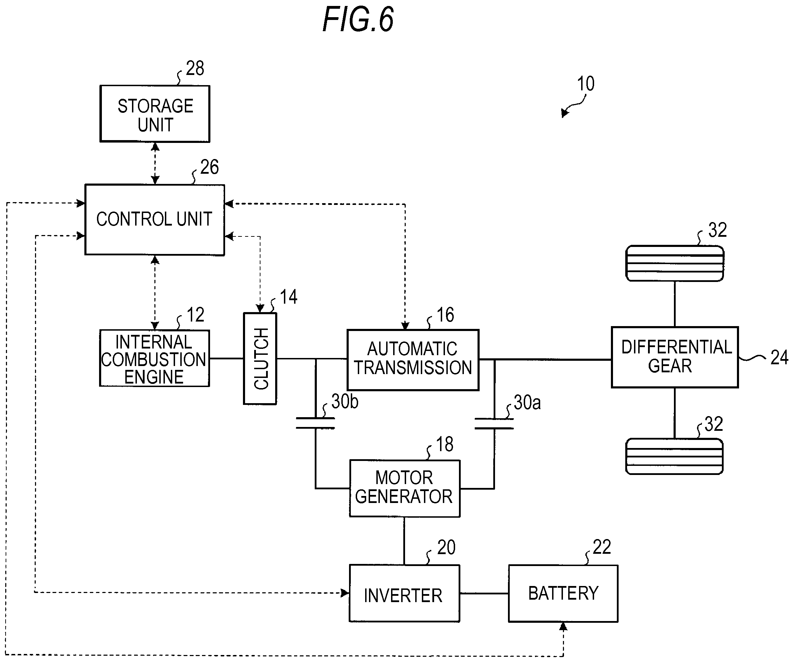

Fig. 6 is a functional block diagram of a hybrid vehicle of another configuration including the clutch learning apparatus related to the present embodiment. In addition, this hybrid vehicle is the same as the hybrid vehicle 10 shown in Fig. 1 in terms of the basic configuration. Thus, the same components will be designated by the same reference numerals, and the description thereof will be omitted. The configuration of Fig. 6 has a switching mechanism 30a that switches connection/disconnection between the motor generator 18 and the output shaft side of the automatic transmission 16, and a switching mechanism 30b that switches connection/disconnection between the motor generator 18 and the input shaft side of the automatic transmission 16. In this case, the motor generator 18 realizes the function of preventing the torque drop during the control of the clutch 14, as mentioned above. Additionally, it is possible to use the motor generator 18 as a driving source or use the motor generator as a generator according to the driving state of the hybrid vehicle 10, and efficient driving of the hybrid vehicle 10 can be realized while performing the engagement starting point learning. Additionally, if the motor generator 18 is connected to the input shaft 16a of the automatic transmission 16 by the switching mechanism 30b by bringing the clutch 14 into the connected state when the automatic transmission 16 is in the neutral state, the crankshaft 12a of the internal combustion engine 12 which has stopped can be rotated. That is, a starter device for the internal combustion engine 12 can be omitted, and this can contribute to having a simple configuration and cutting costs. Additionally, when the amount of charge (SOC) of the battery 22 decreases extremely, the automatic transmission 16 may also be brought into the neutral state by connecting the motor generator 18 to the input side (input shaft) of the automatic transmission 16 via the switching mechanism 30b and bringing the clutch 14 into the torque transmission state. In this case, the torque of the internal combustion engine 12 can be absorbed by the motor generator 18, and power generation can be executed when the vehicle has stopped. The battery 22 can be charged by this power generation when the vehicle has stopped.

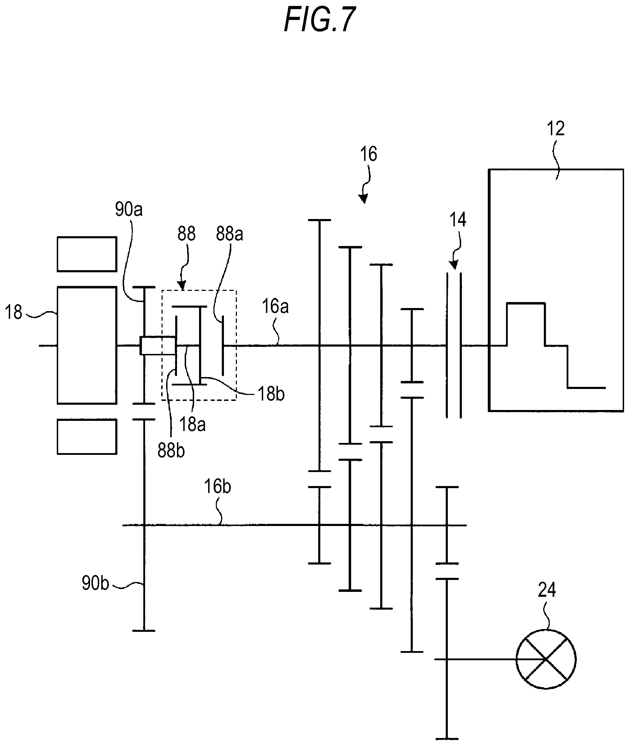

Fig. 7 shows an example in which the switching mechanisms 30a and 30b of Fig. 6 are realized by one connection switching part 88. Also in Fig. 7, the same components as those of Fig. 2 will be designated by the same reference numerals, and the description thereof will be omitted. The connection switching part 88 is constituted by, for example, a dog clutch, and there are a case where the motor generator 18 is connected to the input shaft 16a, a case where the motor generator is connected to the output shaft 16b, and a neutral case where the motor generator is connected to neither the input shaft 16a nor the output shaft 16b. In Fig. 7, although the automatic transmission 16 has the same structure as and the same function as the automatic transmission 16 shown in Fig. 2, the illustration thereof is simplified. Basically, the torque of the internal combustion engine 12 transmitted to the input shaft 16a of the automatic transmission 16 via the clutch 14 is transmitted to the output shaft 16b side via the plurality of gear pairs. Illustration of the dog clutches that perform the switching of the torque transmission is omitted. The connection switching part 88 transmits the torque of the motor generator 18 to the input shaft 16a when the driving gear 18b fixed to the output shaft 18a of the motor generator 18 meshes with a switching gear 88a on the input shaft 16a side. Accordingly, when the clutch 14 is connected and the torque of the internal combustion engine 12 is input to the input shaft 16a, motor assist driving is performed. Additionally, when the clutch 14 is disconnected, driving using only the motor is performed. Meanwhile, when the driving gear 18b meshes with the switching gear 88b, the torque of the motor generator 18 is transmitted to a second gear 90b fixed to the output shaft 16b via a first gear 90a. Accordingly, when the clutch 14 is connected and the torque of the internal combustion engine 12 is input to the input shaft 16a, the motor assist driving is performed. Additionally, when the clutch 14 is disconnected, the driving using only the motor is performed. Additionally, when the driving gear 18b meshes with neither the switching gear 88a nor the switching gear 88b, engine driving using only the torque of the internal combustion engine 12 is performed by the connection of the clutch 14. Additionally, similar to the configuration of Fig. 6, also in the configuration of Fig. 7, the crankshaft 12a of the internal combustion engine 12 can be turned by the motor generator 18, and the starter device can be omitted. This can also contribute to having a simple configuration and cutting costs. Even in any control state, the engagement starting point learning of the present embodiment can be executed, and the same effects as the above-described effects can be obtained.

Although the hybrid vehicle 10 including the motor generator 18 has been shown and described in the present embodiment, when the "torque drop" is permissible, or when the torque drop can be suppressed by other methods, the engagement starting point learning of the present embodiment can also be applied to vehicles that do not include the motor generator 18, and the same effects can be obtained.

Additionally, in the present embodiment, although the dog transmission equipped with the dog clutches is shown as the configuration of the automatic transmission 16, this disclosure can, however, also be applied to gear switching mechanisms (automatic transmissions) equipped with a synchromesh. In this case, since the double clutch control makes the rotation speed difference between the internal combustion engine side and the automatic transmission side small, the additional effect that this can contribute to prevention of degradation of the synchromesh is also exhibited.

Although an example in which the engagement starting point learning is implemented when down-shift in which a change in the input shaft rotation speed R3 is apt to appear markedly is performed has been described in the present embodiment, the engagement starting point learning can also be executed when up-shift is performed, and the same effects can be obtained. Additionally, although an example in which the learning of the engagement starting point is detected as the value of the clutch stroke has been shown in the present embodiment, transmission information showing that a change in the rotation state of the input shaft 16a side has reached a predetermined value or more due to the double clutch control may be used. For example, the fluid pressure value of the fluid pressure circuit 52 may be used, and a value showing the amount of displacement of the clutch disk 36, the pressure plate 38, the diaphragm spring 40, or the like may be used.

Although the embodiment disclosed here and its modification example have been described, the embodiment and the modification example are merely illustrative examples. It is explicitly stated that all value ranges or indications of groups of entities disclose every possible intermediate value or intermediate entity for the purpose of original disclosure as well as for the purpose of restricting the claimed invention, in particular as limits of value ranges.

## Claims

1. A clutch learning apparatus comprising:
a gear shift mechanism (16) that has a plurality of gear pairs (72, 74, 76, 78, 80, 82) with different gear ratios between an input shaft (16a) and an output shaft (16b) and that switches between a torque transmission state where torque is transmitted and a torque non-transmission state where torque is not transmitted between the input shaft and the output shaft for each of the gear pairs;
a clutch (14) that is connected to the input shaft of the gear shift mechanism and changes a rotation transmission state of rotary power to be supplied from a driving source side;
a control unit (26) that controls the rotation transmission state of the clutch; and
a storage unit (28) that stores transmission information showing that the rotary power begins to be transmitted to the input shaft by the clutch,
wherein the control unit performs the clutch control of disconnecting the clutch after being temporarily brought into the rotation transmission state while the gear pair of the torque transmission state is changed to another gear pair with a different gear ratio in the gear shift mechanism,
wherein the storage unit stores the transmission information when a change in the rotation state of the input shaft side is a predetermined value or more due to the clutch control,
wherein the transmission information is information on an engagement starting point where the clutch begins to be connected, and **characterised in that** the engagement starting point is stored during a shift operation of the gear shift mechanism in the torque non-transmission state.

2. The clutch learning apparatus according to Claim 1,
wherein a motor (18) that adjusts the output torque of the output shaft while the gear pair of the torque transmission state is changed to another gear pair with a different gear ratio is connected to the output shaft.

3. The clutch learning apparatus according to Claim 1 or 2,
wherein the storage unit stores new transmission information when the gear shift mechanism switches between the gear pairs of the torque transmission state from a gear pair with a high gear ratio to a gear pair with a low gear ratio.

4. The clutch learning apparatus according to any one of Claims 1 to 3,
wherein the gear shift mechanism is a dog transmission.

5. The clutch learning apparatus according to any one of Claims 1 to 4,
wherein the transmission information is information on a position where the clutch begins to be connected.

6. The clutch learning apparatus according to any one of Claims 1 to 5,
wherein the control unit performs a double clutch control in which the gear shift mechanism is temporarily brought into the rotation transmission state after the clutch is disconnected from the rotation transmission state before gear shift of the gear shift mechanism, and the clutch is disconnected again.

## Patentansprüche

1. Kupplungslernvorrichtung, mit:
einem Zahnradumschaltmechanismus (16), der eine Vielzahl von Zahnradpaaren (72, 74, 76, 78, 80, 82) mit verschiedenen Übersetzungsverhältnissen zwischen einer Eingangswelle (16a) und einer Ausgangswelle (16b) aufweist und der zwischen einem Drehmoment-Übertragungszustand, bei dem ein Drehmoment übertragen wird, und einem Drehmoment-Nicht-Übertragungszustand, bei dem kein Drehmoment zwischen der Eingangswelle und der Ausgangswelle übertragen wird, für jedes der Zahnradpaare umschaltet;
einer Kupplung (14), die mit der Eingangswelle des Zahnradumschaltmechanismus verbunden ist und einen Drehungsübertragungszustand einer Drehkraft ändert, die von einer Antriebsquellenseite zuzuführen ist;
einer Steuereinheit. (26), die den Drehungsübertragungszustand der Kupplung steuert; und
einer Speichereinheit (28), die eine Übertragungsinformation speichert, die zeigt, dass die Drehkraft beginnt, durch die Kupplung auf die Eingangswelle übertragen zu werden,
bei der die Steuereinheit die Kupplungssteuerung zum Lösen der Kupplung durchführt, nachdem sie zeitweise in den Drehungsübertragungszustand gebracht wurde, während das Zahnradpaar des Drehmoment-Übertragungszustands zu einem anderen Zahnradpaar mit einem anderen Übersetzungsverhältnis in dem Zahnradumschaltmechanismus wechselt,
bei der die Speichereinheit die Übertragungsinformation speichert, wenn eine Änderung in dem Drehungszustand der Eingangswellenseite einen vorgegebenen Wert oder mehr aufgrund der Kupplungssteuerung einnimmt,
bei der die Übertragungsinformation eine Information über einen Eingriffsstartpunkt ist, bei dem die Kupplung beginnt, sich zu verbinden, und
**dadurch gekennzeichnet, dass**
der Eingriffsstartpunkt während eines Umschaltvorgangs des Zahnradumschaltmechanismus in dem Drehmoment-Nicht-Übertragungszustand gespeichert wird.

2. Kupplungslernvorrichtung nach Anspruch 1,
bei der ein Motor (18), der das Ausgangsdrehmoment der Ausgangswelle einstellt, während das Zahnradpaar des Drehmoment-Übertragungszustandes zu einem anderen Zahnradpaar mit einem anderen Übersetzungsverhältnis wechselt, mit der Ausgangswelle verbunden ist.

3. Kupplungslernvorrichtung nach Anspruch 1 oder 2,
bei der die Speichereinheit neue Übertragungsinformationen speichert, wenn der Zahnradumschaltmechanismus zwischen den Zahnradpaaren des Drehmoment-Übertragungszustands von einem Zahnradpaar mit einem hohen Übersetzungsverhältnis zu einem Zahnradpaar mit einem geringen Übersetzungsverhältnis umschaltet.

4. Kupplungslernvorrichtung nach einem der Ansprüche 1 bis 3,
bei der der Zahnradumschaltmechanismus ein Klauengetriebe ist.

5. Kupplungslernvorrichtung nach einem der Ansprüche 1 bis 4,
bei der die Übertragungsinformation eine Information über eine Position ist, bei der die Kupplung beginnt, sich zu verbinden.

6. Kupplungslernvorrichtung nach einem der Ansprüche 1 bis 5,
bei der die Steuereinheit eine Doppelkupplungssteuerung durchführt, bei der der Getriebeumschaltmechanismus zeitweise in den Drehungsübertragungszustand versetzt wird, nachdem die Kupplung sich von dem Drehungsübertragungszustand vor einem Zahnradumschalten des Zahnradumschaltmechanismus gelöst hat, und sich die Kupplung erneut löst.

## Revendications

1. Appareil d'apprentissage d'embrayage comprenant :
un mécanisme de changement de vitesse (16) qui possède une pluralité de paires de vitesses (72, 74, 76, 78, 80, 82) avec différents rapports de vitesse entre un arbre d'entrée (16a) et un arbre de sortie (16b) et qui bascule entre un état de transmission de couple où un couple est transmis et un état de non-transmission de couple ou un couple n'est pas transmis entre l'arbre d'entrée et l'arbre de sortie pour chacune des paires de vitesses ;
un embrayage (14) qui est connecté à l'arbre d'entrée du mécanisme de changement de vitesse et modifie un état de transmission de rotation d'une énergie rotative devant être fournie à partir d'un côté d'une source d'entraînement ;
une unité de commande (26) qui commande l'état de transmission de rotation de l'embrayage ; et
une unité de stockage (28) qui stocke des informations de transmission montrant que l'énergie rotative commence à être transmise à l'arbre d'entrée par l'embrayage,
dans lequel l'unité de commande effectue la commande d'embrayage qui consiste à déconnecter l'embrayage après qu'il a été amené temporairement à l'état de transmission de rotation pendant que la vitesse de l'état de transmission de couple est changée à une autre vitesse avec un rapport de vitesse différent dans le mécanisme de changement de vitesse,
dans lequel l'unité de stockage stocke les informations de transmission lorsqu'un changement d'état de rotation du côté de l'arbre d'entrée est d'une valeur prédéterminée ou plus en raison de la commande d'embrayage,
dans lequel les informations de transmission sont des informations sur un point de départ de mise en prise où l'embrayage commence à être connecté, et
**caractérisé en ce que**
le point de départ de la mise en prise est stocké lors d'une opération de changement du mécanisme de changement de vitesse dans l'état de non-transmission de couple.

2. Appareil d'apprentissage d'embrayage selon la revendication 1,
dans lequel un moteur (18) qui règle le couple de sortie de l'arbre de sortie pendant que la paire de vitesses de l'état de transmission de couple est changé à une autre vitesse avec un rapport de vitesse différent est connecté à l'arbre de sortie.

3. Appareil d'apprentissage d'embrayage selon la revendication 1 ou 2,
dans lequel l'unité de stockage stocke de nouvelles informations de transmission lorsque le mécanisme de changement de vitesse bascule entre les paires de vitesse de l'état de transmission de couple, d'une paire de vitesse à rapport de vitesse élevé vers un engrenage à rapport de vitesse faible.

4. Appareil d'apprentissage d'embrayage selon l'une quelconque des revendications 1 à 3,
dans lequel le mécanisme de changement de vitesse est une transmission à griffes.

5. Appareil d'apprentissage d'embrayage selon l'une quelconque des revendications 1 à 4,
dans lequel les informations de transmission sont des informations sur une position où l'embrayage commence à être connecté.

6. Appareil d'apprentissage d'embrayage selon l'une quelconque des revendications 1 à 5,
dans lequel l'unité de commande effectue une double commande d'embrayage dans laquelle le mécanisme de changement de vitesse est amené temporairement à l'état de transmission de rotation après que l'embrayage a été déconnecté de l'état de transmission de rotation avant le changement de vitesse du mécanisme de changement de vitesse, et l'embrayage est déconnecté à nouveau.
